# FASCICULE DE BREVET EUROPEEN

(11) **EP 0 908 352 B1**
(45) Date de publication et mention de la délivrance du brevet: **16.05.2001**
(21) Numéro de dépôt: 98402338.2
(22) Date de dépôt: 23.09.1998
(51) Int. Cl.: B60Q 1/068

(54) **Dispositif de réglage de l'orientation d'un faisceau lumineux d'un projecteur de véhicule automobile**
Vorrichtung zum Einstellen der Neigung eines Kfz-Scheinwerfers
Aiming device for vehicle headlamp

(30) Priorité: 10.10.1997 FR 9712710
(43) Date de publication de la demande: 14.04.1999
(73) Titulaire: AUTOMOBILES PEUGEOT, 75116 Paris (FR); AUTOMOBILES CITROEN, 92200 Neuilly-sur-Seine (FR)
(72) Inventeur: Jamilloux, Olivier, 78540 Vernouillet (FR)
(74) Mandataire: Lanceplaine, Jean-Claude

(56) Documents cités:
- EP-A- 0 705 729
- FR-A- 2 624 453
- FR-A- 2 636 578
- US-A- 4 333 131
- US-A- 4 916 586

## Description

La présente invention a pour objet un dispositif de réglage de l'orientation d'un faisceau lumineux d'un projecteur de véhicule automobile.

L'invention a également pour objet un projecteur de véhicule automobile équipé d'un tel dispositif de réglage.

Les projecteurs des véhicules automobiles comportent chacun un boîtier fermé par une glace dans lequel est monté au moins un réflecteur portant des moyens d'éclairement.

Généralement, le réflecteur est relié à une structure fixe constituée par le boîtier du projecteur au moyen d'un dispositif permettant de régler la position du réflecteur et l'orientation en site et en azimut du faisceau lumineux.

Pour cela, le réflecteur est relié à la structure fixe par trois points d'appui répartis au trois sommets d'un triangle rectangle et dont les côtés adjacents à l'angle droit forment respectivement un axe vertical et un axe horizontal.

Jusqu'à présent, un des points d'appui est fixe et les deux autres points d'appui délimitant un côté du triangle adjacent à l'angle droit sont réglables de façon à permettre un réglage en azimut et un réglage en site du faisceau lumineux.

Dans les dispositifs de réglage le plus souvent utilisés dans les véhicules automobiles, le réglage en azimut est manuel et le réglage en site est motorisé à l'aide par exemple d'un moteur électrique pas à pas.

Le réglage motorisé au moyen par exemple d'un moteur électrique pas à pas permet de modifier l'orientation en site du faisceau lumineux par exemple en fonction de la charge du véhicule au cours de l'utilisation de celui-ci, tandis que le réglage manuel en azimut ne s'effectue, généralement qu'au moment de l'installation du projecteur.

Le moteur électrique peut être asservi à un circuit électronique de calcul de la correction à effectuer, de façon à permettre un réglage automatique en site du faisceau lumineux de chacun des projecteurs.

Le réglage initial du projecteur aussi bien en site qu'en azimut ne doit pas être modifié par les corrections ultérieures, en particulier dans le cas de la correction automatique pour laquelle il sert de valeur de référence.

On connaît dans le FR-A-2 624 453, un dispositif de réglage de l'orientation d'un faisceau lumineux d'un projecteur de véhicule automobile, du type comprenant au moins un réflecteur relié à une structure fixe par trois points d'appui A, B et C répartis aux trois sommets d'un triangle rectangle et dont les côtés adjacents à l'angle droit forment respectivement un axe vertical AC et un axe horizontal AB, où deux points d'appui A et C sont réglables et comportent des moyens de réglage en site par pivotement du réflecteur autour de l'axe horizontal AB et des moyens de réglage initial en azimut par pivotement dudit réflecteur autour de l'axe vertical AC, lesdits moyens de réglage étant indépendants les uns des autres.

L'invention a pour but de proposer un dispositif de réglage de l'orientation du faisceau lumineux qui permet d'assurer les fonctions de réglage initial en azimut et en site et de réglage motorisé en site sans influence les unes sur les autres et sans que le réglage selon un axe provoque un déréglage selon un autre axe.

L'invention a donc pour objet un dispositif de réglage de l'orientation d'un faisceau lumineux d'un projecteur de véhicule automobile, du type comprenant au moins un réflecteur relié à une structure fixe par trois points d'appui répartis au trois sommets d'un triangle rectangle et dont les côtés adjacents à l'angle droit forment respectivement un axe vertical et un axe horizontal, caractérisé en ce que les trois points d'appui sont réglables et en ce qu'il comporte des moyens motorisés de réglage en site par pivotement du réflecteur autour de l'axe horizontal, des moyens de réglage initial en site par pivotement du réflecteur autour du point d'appui situé sur l'axe vertical et adjacent au point d'appui situé sur l'angle droit du triangle et des moyens de réglage initial en azimut par pivotement dudit réflecteur autour de l'axe vertical, lesdits moyens de réglage étant indépendants les uns des autres pour que le réglage selon un axe ne provoque pas un déréglage selon un autre axe et lesdits moyens de réglage initial en site comprenant une tige horizontale dont une extrémité est reliée au réflecteur par une articulation à rotule disposée au niveau du point d'appui situé sur l'angle droit du triangle, un arbre horizontal dont une extrémité est reliée au réflecteur par une articulation en rotule au niveau du point d'appui situé sur l'axe horizontal et adjacent au point d'appui situé sur l'angle droit et un organe de commande solidaire de l'extrémité libre de la tige et entraînant en rotation et en translation simultanément ladite tige et ledit arbre.

Selon d'autres caractéristiques de l'invention :
- la tige et l'arbre sont reliés en rotation l'un à l'autre par des moyens de transmission débrayables,
- les moyens de transmission sont formés par un axe libre en rotation, s'étendant perpendiculairement à la tige et à l'arbre et portant à l'une de ses extrémités un premier pignon destiné à coopérer avec un pignon solidaire en rotation avec ladite tige et à l'autre de ses extrémités un second pignon destiné à coopérer avec un pignon solidaire en rotation avec ledit arbre,
- le pignon porté par l'arbre est maintenu appliqué contre le second pignon de l'axe par un organe élastique,
- les moyens de réglage initial en azimut sont formés par un organe de commande disposé dans l'axe de l'arbre à l'opposé de l'articulation à rotule et déplaçable en rotation et en translation entre une première position désengagée de l'arbre et une seconde position d'accouplement avec cet arbre et de débrayage des organes de transmission pour entraîner en rotation et en translation ledit arbre,
- l'organe de commande de l'arbre est formé par une molette montée coulissante sur la structure fixe et comportant un évidemment central muni de moyens d'accouplement avec ledit arbre et dont le bord périphérique extérieur est en appui sur le pignon porté par cet arbre,
- les moyens d'accouplement sont formés par un téton disposé sur l'extrémité libre de l'arbre et par une empreinte de forme complémentaire audit téton et ménagée dans le fond de l'évidement central de la molette,
- l'arbre comporte une zone filetée coopérant avec un taraudage ménagé dans une patte solidaire de la structure fixe.

L'invention a également pour objet un projecteur de véhicule automobile, caractérisé en ce qu'il comporte un dispositif de réglage de l'orientation du faisceau lumineux tel que mentionné ci-dessus.

Les caractéristiques et avantages de l'invention apparaîtront au cours de la description qui va suivre, donnée à titre d'exemple et faite en référence aux dessins annexés, sur lesquels :
- la Fig.1 est une vue schématique en perspective d'un projecteur de véhicule automobile,
- la Fig.2 est une vue schématique en élévation d'un réflecteur du projecteur, équipé d'un dispositif de réglage de l'orientation du faisceau lumineux, conforme à l'invention,
- la Fig. 3 est une vue en coupe selon la ligne 3-3 de la Fig. 2,
- la Fig. 4 est une vue en coupe selon la ligne 4-4 de la Fig. 2.

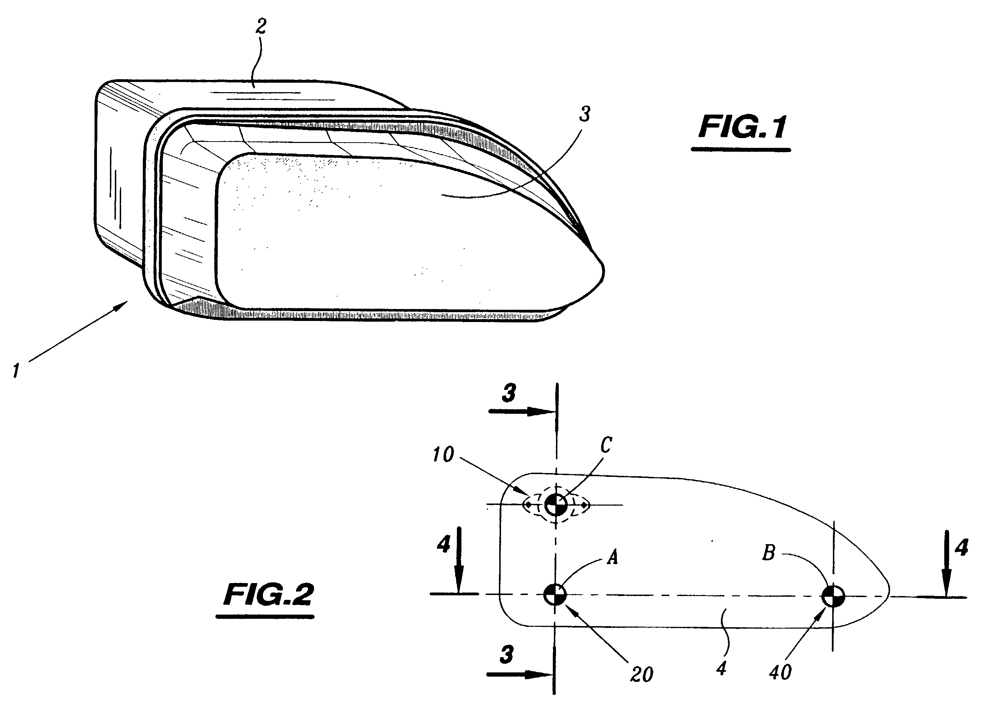

On a représenté à la Fig. 1, un projecteur de véhicule automobile désigné par la référence générale 1.

De façon classique, le projecteur 1 comprend un boîtier 2 en matière plastiqué, une glace 3 fermant le boîtier 2, un réflecteur 4 agencé à l'intérieur dudit boîtier 2 et des moyens d'éclairement, non représentés, portés par ce réflecteur 4.

Le réflecteur 4 est relié à une structure fixe constituée par le boîtier 2 du projecteur 1 au moyen d'un dispositif de réglage permettant de faire varier l'orientation horizontale du réflecteur 4 et effectuer ainsi le réglage en azimut du faisceau lumineux et également de faire varier l'orientation verticale de ce réflecteur 4 pour réaliser l'orientation en site dudit faisceau lumineux.

Pour cela, le réflecteur 4 est relié au boîtier 2 par trois points d'appui, respectivement A, B et C répartis aux trois sommets d'un triangle rectangle, comme représenté à la Fig. 2, et dont les côtés respectivement AB et AC adjacents à l'angle droit forment un axe vertical et un axe horizontal.

Les trois points d'appui A, B et C sont réglables.

Le dispositif de réglage comporte des moyens 10 motorisés de réglage en site par pivotement du réflecteur 4 autour de l'axe horizontal AB des moyens 20 de réglage initial en site par pivotement du réflecteur 4 autour du point d'appui C et des moyens 40 de réglage initial en azimut par pivotement dudit réflecteur autour de l'axe vertical AC.

Les moyens de réglage respectivement 10, 20 et 40, sont indépendants les uns des autres pour que le réglage selon un axe ne provoque pas un déréglage selon un autre axe.

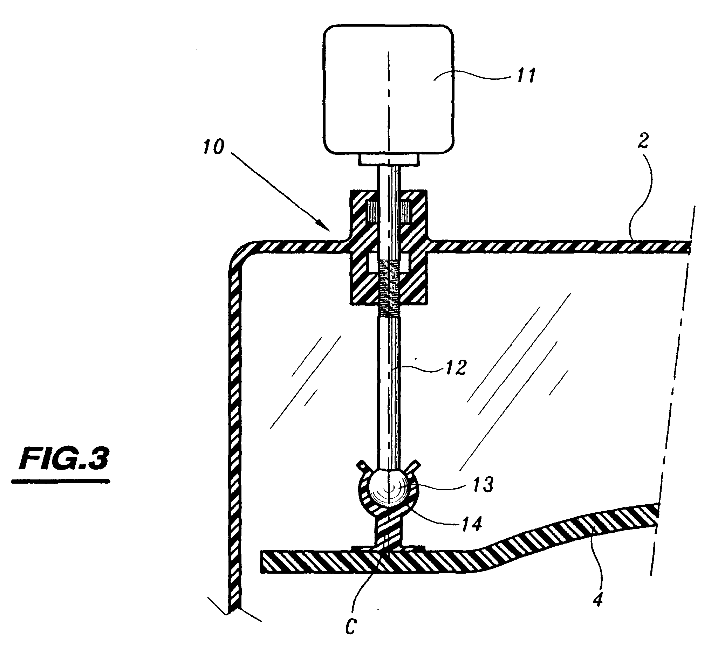

Ainsi que représenté à la Fig. 3, les moyens 10 motorisés de réglage en site sont d'un type classique et comprennent un moteur électrique 11, par exemple pas à pas qui entraîne par des moyens appropriés non représentés, en coulissement une tige 12 s'étendant à l'intérieur du boîtier 2.

L'extrémité libre de la tige 12 est reliée au réflecteur 4 par une articulation à rotule 13 montée par emboîtement dans un logement 14 solidaire dudit réflecteur 4 et disposé au niveau du point d'appui C.

Ainsi, le coulissement de la tige 12 entraîné par le moteur 11 provoque le pivotement du réflecteur 4 autour de l'axe horizontal AB.

Le moteur électrique 11 peut être asservi à un circuit électronique de calcul de la correction à effectuer de façon à permettre un réglage automatique en site du faisceau lumineux.

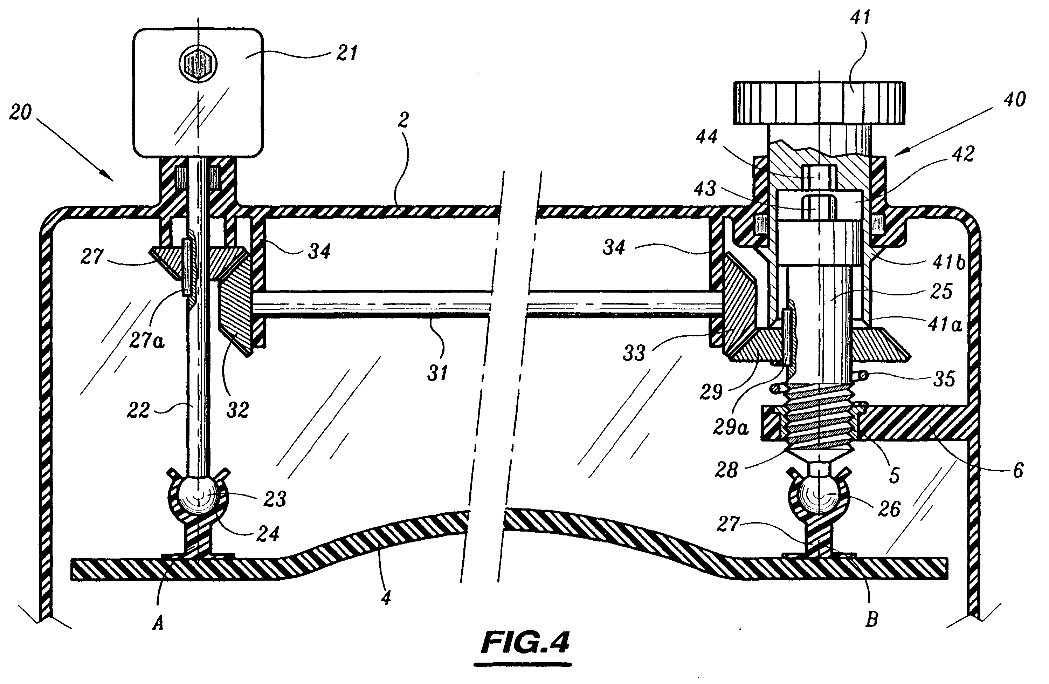

En se reportant maintenant à la Fig. 4, on va décrire les moyens 20 de réglage initial en site et les moyens 40 de réglage initial en azimut.

Les moyens 20 de réglage initial en site comprennent un organe de commande manuel constitué de manière classique par un système à renvoi 21 qui entraîne en translation une tige 22 s'étendant à l'intérieur du boîtier 2.

L'extrémité libre de la tige 22 opposée à celle reliée à l'organe de commande 21 comporte une articulation à rotule 23 emboîtée dans un logement 24 solidaire du réflecteur 4.

Le logement 24 est disposé au niveau du point d'appui A.

Les moyens 20 de réglage initial en site comprennent également un arbre 25 horizontal et s'étendant à l'intérieur du boîtier 2 parallèlement à la tige 22.

Une extrémité de l'arbre 25 est reliée au réflecteur 4 par une articulation à rotule 26 emboîtée dans un logement 27 solidaire du réflecteur 4.

L'articulation à rotule 26 et le logement 27 sont situés au niveau du point d'appui B.

L'arbre 25 comporte une zone filetée 28 située à proximité de l'extrémité dudit arbre 25 comportant l'articulation à rotule 26.

Cette zone filetée 28 coopère avec un taraudage 5 ménagée dans une patte 6 solidaire du boîtier 2.

La tige 22 et l'arbre 25 sont reliés en rotation l'un à l'autre par des moyens 30 de transmission débrayables.

Ces moyens 30 de transmission sont formés par un axe 31 libre en rotation et s'étendant perpendiculairement à la tige 22 et à l'arbre 23.

Une extrémité de l'axe 31 porte un premier pignon 32 destiné à coopérer avec un pignon 27 monté sur la tige 22.

Ce pignon 27 est solidaire en rotation avec ladite tige 22 au moyen d'une clavette 27a.

L'autre extrémité de l'axe 31 porte un second pignon 33 destiné à coopérer avec un pignon 29 monté sur l'arbre 25.

Ce pignon 29 est solidaire en rotation dudit arbre 25 au moyen d'une clavette 29a.

L'axe 31 est maintenu libre en rotation par des pattes 34 solidaires du boîtier 2.

Le pignon 29 porté par l'arbre 25 est maintenu appliqué contre le pignon 33 de l'axe 31 par un organe élastique 35 constitué par exemple par un ressort interposé entre ledit pignon 29 et la patte 6.

Les moyens 40 de réglage initial en azimut sont formés par un organe de commande 41 disposé dans l'axe de l'arbre 25 à l'opposé de l'articulation de rotule 26.

L'organe de commande 41 est constitué par une molette qui est montée dans le boîtier 2 déplaçable en rotation et en translation entre une première position désengagée de l'arbre 25 et une seconde position d'accouplement avec cet arbre 25.

A cet effet, la molette 41 comporte un évidemment central 42 muni de moyen d'accouplement avec l'arbre 25.

Dans la première position de la molette 41 représentée à la Fig.4, le bord périphérique extérieur 41a de l'évidement 42 de cette molette 41 est en appui sur le pignon 29.

Dans la seconde position de la molette 41, dans laquelle cette molette 41 est accouplée avec l'arbre 25, le bord périphérique extérieur 41a agit sur le pignon 29 de telle manière que ce pignon 29 ne soit plus engréné avec le pignon 33 de l'axe 31.

Les moyens d'accouplement de la molette 41 avec l'arbre 25 sont formés par un téton 43 de section par exemple carrée ou hexagonale et par une empreinte 44 de forme complémentaire audit téton 43 et ménagée dans le fond de l'évidement central 42 de la molette 41.

Les réglages initiaux en site et en azimut sont réalisés de la façon suivante.

En agissant sur l'organe de commande 21, la tige 22 se déplace en translation ainsi que par l'intermédiaire des pignons 27, 32, 33 et 29, l'arbre 25.

Cet arbre 25, grâce au filetage 28 coopérant avec le taraudage 5, se déplace dans le même sens que la tige 22.

Les points d'appui A et B se déplacent donc simultanément en translation de sorte que le réflecteur 4 tourne autour du point C ce qui permet d'obtenir le réglage initial en site de ce réflecteur 4.

Pour obtenir le réglage initial en azimut, le pignon 29 porté par l'arbre 25 doit être débrayé du pignon 33 porté par l'axe 21.

A cet effet, la personne chargée d'effectuer le réglage initial en azimut appui sur la molette 41 qui coulisse dans le boîtier 2 jusqu'au moment où le téton 43 vient se loger dans l'empreinte 44 de façon à solidariser en rotation la molette 41 avec l'arbre 25.

Simultanément, le coulissement de la molette 41 assure le débrayage du pignon 29 avec le pignon 33 porté par l'axe 31.

La rotation de la molette 41 provoque la rotation de l'arbre 25 par l'intermédiaire du téton 43 et de l'empreinte 44 de telle manière que cet arbre 25 se déplace en translation si bien que le point d'appui B se déplace également de façon à faire pivoter le réflecteur 4 autour de l'axe vertical AC ce qui permet d'obtenir le réglage initial en azimut de ce réflecteur 4.

Lorsque la molette 41 est relâchée, le ressort de rappel 35 repousse cette molette 41 ainsi que le pignon 29 pour le remettre en prise avec le pignon 33.

La molette 41 est maintenue dans cette position par la force de rappel du ressort 35 et par une butée 41b ménagée sur la face externe de ladite molette 41 et qui coopère avec la face interne du boîtier 2.

Le dispositif de réglage selon l'invention permet donc de préserver l'indépendance de chaque réglage aussi bien manuel qu'automatique, avec un nombre de pièces limité.

Grâce au dispositif de réglage selon l'invention, lors du réglage automatique en site, les réglages initiaux en site et en azimut sont conservés.

Le dispositif de réglage selon l'invention permet donc de pouvoir effectuer un réglage selon un axe sans provoquer un déréglage selon l'autre axe.

## Revendications

1. Dispositif de réglage de l'orientation d'un faisceau lumineux d'un projecteur (1) de véhicule automobile, du type comprenant au moins un réflecteur (4) relié à une structure fixe (2) par trois points d'appui A, B et C répartis aux trois sommets d'un triangle rectangle et dont les côtés adjacents à l'angle droit forment respectivement un axe vertical AC et un axe horizontal AB, caractérisé en ce que les trois points d'appui A, B, C sont réglables et en ce qu'il comporte des moyens (10) motorisés de réglage en site par pivotement du réflecteur (4) autour de l'axe horizontal AB, des moyens (20) de réglage initial en site par pivotement du réflecteur (4) autour du point d'appui C, situé sur l'axe vertical AC et adjacent au point d'appui A situé sur l'angle droit du triangle et des moyens (40) de réglage initial en azimut par pivotement dudit réflecteur (4) autour de l'axe vertical AC, lesdits moyens (10, 20, 40) de réglage étant indépendants les uns des autres pour que le réglage selon un axe ne provoque pas un déréglage selon un autre axe et lesdits moyens (20) de réglage initial en site comprenant une tige horizontale (22) dont une extrémité est reliée au réflecteur (4) par une articulation à rotule (23,24) disposée au niveau du point d'appui A situé sur l'angle droit du triangle, un arbre horizontal (25) dont une extrémité est reliée au réflecteur (4) par une articulation à rotule (26, 27) au niveau du point d'appui B situé sur l'axe horizontal AB et adjacent au point d'appui A situé sur l'angle droit et un organe de commande (21) solidaire du l'extrémité libre de la tige (22) et entraînant en rotation et en translation simultanément ladite tige (22) et ledit arbre (25).

2. Dispositif selon la revendication 1, caractérisé en ce que la tige (22) et l'arbre (25) sont reliés en rotation l'un à l'autre par des moyens de transmission débrayables.

3. Dispositif selon la revendication 2, caractérisé en ce que les moyens de transmission sont formés par un axe (31) libre en rotation, s'étendant perpendiculairement à la tige (22) et à l'arbre (25) et portant à l'une de ses extrémités un premier pignon (32) destiné à coopérer avec un pignon (27) solidaire en rotation avec ladite tige (22) et à l'autre de ses extrémités un second pignon (33) destiné à coopérer avec un pignon (29) solidaire en rotation avec ledit arbre (25).

4. Dispositif selon la revendication 3, caractérisé en ce que le pignon (29) porté par l'arbre (25) est maintenu appliqué contre le second pignon (33) de l'axe (31) par un organe élastique (35).

5. Dispositif selon l'une quelconque des revendications précédentes, caractérisé en ce que les moyens (40) de réglage initial en azimut sont formés par un organe de commande(41) disposé dans l'axe de l'arbre (25) à l'opposé de l'articulation à rotule (26, 27) et déplaçable en rotation et en translation entre une première position désengagée de l'arbre (25) et une seconde position d'accouplement avec cet arbre (25) et de débrayage des organes de transmission (27, 32, 33, 29) pour entraîner en rotation et en translation ledit arbre (25).

6. Dispositif selon l'une quelconque des revendications précédentes, caractérisé en ce que l'organe de commande est formé par une molette (41) montée coulissante sur la structure fixe (2) et comportant un évidemment central (42) muni de moyens (43, 44) d'accouplement avec ledit arbre (25) et dont le bord périphérique extérieur (41a) est en appui sur le pignon (29) porté par cet arbre (25).

7. Dispositif selon la revendication 6, caractérisé en ce que les moyens d'accouplement sont formés par un téton (43) disposé sur l'extrémité libre de l'arbre (25) et par une empreinte (44) de forme complémentaire audit téton (43) et ménagée dans le fond de l'évidement central (42) de la molette (41).

8. Dispositif selon l'une quelconque des revendications précédentes, caractérisé en ce que l'arbre (25) comporte une zone filetée (28) coopérant avec un taraudage (5) ménagé dans une patte (6) solidaire de la structure fixe (2).

9. Projecteur de véhicule automobile, caractérisé en ce qu'il comporte un dispositif de réglage de l'orientation du faisceau lumineux selon l'une quelconque des revendications précédentes.

## Patentansprüche

1. Vorrichtung zum Einstellen der Richtung des Lichtbündels eines Scheinwerfers (1) eines Kraftfahrzeuges, der wenigstens einen Reflektor (4), der mit einer festen Konstruktion (2) über drei Stützpunkte A, B und C verbunden ist, die auf drei Scheitel eines rechtwinkligen Dreiecks verteilt sind, dessen dem rechten Winkel benachbarte Seiten jeweils eine vertikale Achse AC und eine horizontale Achse AB bilden, dadurch gekennzeichnet, daß die Stützpunkte A, B und C einstellbar sind und daß sie motorbetriebene Einrichtungen (10) zur Höheneinstellung durch Schwenken des Reflektors (4) um die horizontale Achse AB, Einrichtungen (20) zur anfänglichen Höheneinstellung durch Schwenken des Reflektors (4) um den Stützpunkt C, der sich auf der vertikalen Achse AC und neben dem Stützpunkt A befindet, der auf dem rechten Winkel des Dreieckes liegt, und Einrichtung (40) zur anfänglichen Seiteneinstellung durch Schwenken des besagten Reflektors (4) um die vertikale Achse AC umfaßt, welche Einrichtungen (10, 20 40) zum Einstellen voneinander unabhängig sind, so daß die Einstellung längs einer Achse nicht zu einer Änderung der Einstellung längs einer anderen Achse führt, und die besagten Einrichtungen (20) zur anfänglichen Höheneinstellung einen horizontalen Schaft (22), dessen eines Ende mit dem Reflektor (4) über ein Kugelgelenk (23, 24) verbunden ist, das auf der Höhe des Stützpunktes A angeordnet ist, der auf dem rechten Winkel des Dreiecks liegt, eine horizontale Welle (25), deren eines Ende mit dem Reflektor (4) über ein Kugelgelenk (26, 27) auf der Höhe des Stützpunktes B verbunden ist, der auf der horizontalen Achse AB und neben dem Stützpunkt A liegt, der sich auf dem rechten Winkel befindet, und ein mit dem freien Ende des Schaftes (22) fest verbundenes Betätigungsglied (21) umfassen, das gleichzeitig den Schaft (22) und die Welle (25) in Drehbewegung und in Translationsbewegung bringt.

2. Vorrichtung nach Anspruch 1, dadurch gekennzeichnet, daß der Schaft (22) und die Welle (25) in einer Drehverbindung miteinander über auskuppelbare Übertragungseinrichtungen stehen.

3. Vorrichtung nach Anspruch 2, dadurch gekennzeichnet, daß die Übertragungseinrichtungen aus einer Achse (31) bestehen, die frei drehbar ist, senkrecht zum Schaft (22) und zur Welle (25) verläuft und an einem ihrer Enden ein erstes Ritzel (32), das dazu bestimmt ist, mit einem Ritzel (27) zusammenzuarbeiten, das drehfest mit dem Schaft (22) verbunden ist, und an ihrem anderen Ende ein zweites Ritzel (32) trägt, das dazu bestimmt ist, mit einem Ritzel (29) zusammenzuarbeiten, das drehfest an der Welle (25) angebracht ist.

4. Vorrichtung nach Anspruch 3, dadurch gekennzeichnet, daß das Ritzel (29), das von der Welle (25) getragen ist, am zweiten Ritzel (33) der Achse (31) durch ein elastisches Element (35) anliegend gehalten ist.

5. Vorrichtung nach einem der vorhergehenden Ansprüche, dadurch gekennzeichnet, daß die Einrichtungen (40) zur anfänglichen Seiteneinstellung aus einem Betätigungselement (41), das in der Achse der Welle (25) dem Kugelgelenk (26, 27) gegenüber angeordnet ist und zwischen einer ersten von der Welle (25) entkuppelten Position und einer zweiten mit der Welle (25) und mit den Übertragungselementen (27, 32, 33, 29) gekuppelten Positionen dreh- und längsverschiebbar ist, um die besagte Welle (25) in Drehung und in Längsbewegung zu-versetzen.

6. Vorrichtung nach einem der vorhergehenden Ansprüche, dadurch gekennzeichnet, daß das Betätigungselement aus einem Rändelrad (41) besteht, das gleitend auf der festen Konstruktion (2) angebracht ist und eine mittlere Aussparung (42) aufweist, die mit Einrichtungen (43, 44) zum Einkuppeln mit der Welle (25) versehen sind, und dessen äußerer Umfangsrand (41a) am Ritzel (29) anliegt, das von der Welle (25) getragen wird.

7. Vorrichtung nach Anspruch 6, dadurch gekennzeichnet, daß die Kupplungseinrichtungen aus einem Zapfen (43), der am freien Ende der Welle (25) angeordnet ist, und einer Vertiefung (44) mit einer zum Zapfen (43) komplementären Form bestehen, die im Boden der mittleren Aussparung (42) des Rändelrades (41) vorgesehen ist.

8. Vorrichtung nach einem der vorhergehenden Ansprüche, dadurch gekennzeichnet, daß die Welle (25) einen Gewindebereich (28) aufweist, der mit einem Gewinde (5) zusammenarbeitet, das in einem fest mit der festen Konstruktion (2) verbundenen Fuß (6) vorgesehen ist.

9. Kraftfahrzeugscheinwerfer, dadurch gekennzeichnet, daß er eine Vorrichtung zum Einstellen der Richtung des Lichtbündels nach einem der vorhergehenden Ansprüche aufweist.

## Claims

1. Device for adjustment of the orientation of a light beam of an automotive vehicle headlamp (1), of the type comprising at least one reflector (4) connected to a fixed structure (2) by three support points A, B and C, which are distributed at the three vertices of a right-angle triangle, and the sides adjacent to the right-angle of which triangle respectively form a vertical axis AC and a horizontal axis AB, characterised in that the three support points A, B and C are adjustable, and in that said device comprises motorised means (10) for adjustment in elevation by pivoting of the reflector (4) about the horizontal axis AB, means (20) of initial adjustment in elevation by pivoting of the reflector (4) about the support point C situated on the vertical axis AC and adjacent to the support point A which is situated on the right angle of the triangle, and means (40) of initial adjustment in azimuth by pivoting of said reflector (4) about the vertical axis AC, said adjustment means (10, 20, 40) being independent of each other in order that the adjustment according to one axis does not cause a loss of adjustment according to another axis, and said means (20) of initial adjustment in elevation comprising a horizontal rod (22), one end of which is connected to the reflector (4) by a spherical plain bearing (23, 24) which is disposed at the level of the support point A situated on the right-angle of the triangle, a horizontal shaft (25), one end of which is connected to the reflector (4) by a spherical plain bearing (26, 27) at the level of the support point B situated on the horizontal axis AB and adjacent to the support point A situated on the right-angle, and a control element (21) which is interdependent with the free end of the rod (22) and effecting a simultaneous rotation and translation of said rod (22) and said shaft (25).

2. Device according to claim 1, characterised in that the rod (22) and the shaft (25) are connected rotatably to each other by disengageable transmission means.

3. Device according to claim 2, characterised in that the transmission means are formed by an axle (31) which is free to rotate, extending perpendicularly to the rod (22) and to the shaft (25) and carrying at one of its ends a first pinion (32) which is intended to co-operate with a pinion (27) which is interdependent in rotation with said rod (22), and carrying at the other of its ends a second pinion (33) which is intended to co-operate with a pinion (29) which is interdependent in rotation with said shaft (25).

4. Device according to claim 3, characterised in that the pinion (29) carried by the shaft (25) is kept applied against the second pinion (33) of the axle (31) by an elastic element (35).

5. Device according to any of the preceding claims, characterised in that the means (40) of initial adjustment in azimuth are formed by a control element (41), which is disposed in the axle of the shaft (25) opposite to the spherical plain bearing (26, 27) and is displaceable rotationally and translationally between a first disengaged position of the shaft (25) and a second position of coupling with this shaft (25) and of disengagement of the transmission elements (27, 32, 33, 29) in order to effect a rotation and translation of said shaft (25).

6. Device according to any of the preceding claims, characterised in that the control element is formed by a wheel (41), which is mounted to slide on the fixed structure (2) and comprises a central recess (42), which is provided with means (43, 44) for coupling with said shaft (25) and the exterior peripheral edge (41a) of which is supported on the pinion (29) carried by this shaft (25).

7. Device according to claim 6, characterised in that the coupling means are formed by a dog (43) which is disposed on the free end of the shaft (25) and by a recess (44) of a complementary form to said dog (43), which recess is provided in the bottom of the central recess (42) of the wheel (41).

8. Device according to any of the preceding claims, characterised in that the shaft (25) comprises a threaded zone (28) co-operating with an internal thread (5) provided in a bracket (6) which is integral with the fixed structure (2).

9. Automotive vehicle headlamp, characterised in that it comprises an adjustment device for orientation of the light beam according to any of the preceding claims.
